Europäisches Patentamt

European Patent Office

Office européen des brevets

(19)

(11) Veröffentlichungsnummer: **0 269 789**
B1

(12)

# EUROPÄISCHE PATENTSCHRIFT

(45) Veröffentlichungstag der Patentschrift:
14.11.90

(51) Int. Cl.⁵: **G01B 7/03,** G01B 5/03,
B23Q 16/02

(21) Anmeldenummer: **87111548.1**

(22) Anmeldetag: **10.08.87**

(54) Mehrkoordinaten-Tastkopf.

(30) Priorität: **25.11.86 DE 3640160**

(43) Veröffentlichungstag der Anmeldung:
**08.06.88 Patentblatt 88/23**

(45) Bekanntmachung des Hinweises auf die Patenterteilung:
**14.11.90 Patentblatt 90/46**

(84) Benannte Vertragsstaaten:
**AT CH DE ES FR GB IT LI NL SE**

(56) Entgegenhaltungen:
**EP-A- 0 088 596**
**FR-A- 2 321 622**
**FR-A- 2 366 541**
**GB-A- 2 005 022**
**US-A- 2 967 439**
**US-A- 3 802 297**

(73) Patentinhaber: **DR. JOHANNES HEIDENHAIN GMBH,**
**Dr.-Johannes-Heidenhain-Strasse 5 Postfach 1260,**
**D-8225 Traunreut(DE)**

(72) Erfinder: **Ernst, Alfons, Dipl.-Ing., Traunring 62,**
**D-8225 Traunreut(DE)**
Erfinder: **Spark, Dieter, Dipl.-Ing.,**
**Theodor-Körner-Strasse 2, D-8225 Traunreut(DE)**

ACTORUM AG

## Beschreibung

Die Erfindung betrifft einen Mehrkoordinaten-Tastkopf gemäß dem Oberbegriff des Anspruchs 1.

Es ist eine Vielzahl messender und schaltender Mehrkoordinaten-Tastköpfe bekannt. Bei beiden Ausführungsarten ist es besonders wichtig, daß der Taststift nach Auslenkungen in beliebige Richtungen wieder in seine definierte Nullage zurückkehrt. Diverse Versuche, Lagerungen des Taststiftes im Tastergehäuse besonders vorteilhaft auszubilden, wurden deshalb unternommen.

In der DE-OS 28 41 424 ist ein Tastkopf angegeben, der eine Dreipunktlagerung aufweist. Im Tastkopfgehäuseboden sind drei V-Nuten sternförmig angeordnet. Am Tasterhalter sind drei Stifte mit sphärischer Oberfläche fest angebracht. Der Tasterhalter wird mittels einer Feder in Richtung des Tastkopfgehäusebodens gedrückt und die Stifte nehmen in den zugeordneten V-Nuten eine festgelegte Position ein, in welche sie nach einer Auslenkung des Taststiftes wieder zurückkehren sollen.

Ferner ist aus der EP-A2-0 088 596 ein Tastkopf mit einer Lageranordnung bekannt, die ebenfalls drei Lagerstellen aufweist. Die Lagerstellen sind in einer Ebene gleichmäßig konzentrisch zur Taststiftachse verteilt. Im Tastkopfgehäuseboden sind drei Kugeln angeordnet, welche zur Montage parallel zur Taststiftachse verschiebbar sind. Die drei Gegenlager am Tasterhalter sind unterschiedlich ausgebildet. Ein Gegenlager ist als Verdrehsicherung in Form einer Kegel-Bohrung ausgebildet. Das zweite Gegenlager weist eine V-Nut auf, welche fest zum Mittelpunkt des Tasterhalters ausgerichtet ist. Ein drittes Gegenlager ist eine ebene Auflage, senkrecht zur Taststiftachse und senkrecht zur Kraftkomponente der Andruckfeder.

Durch unterschiedliche Bauformen der einzelnen Lagerstellen wurde bei dem in der EP-A2-0 088 596 angegebenen Stand der Technik versucht, eine statische Überbestimmung, aber auch Unterbestimmung zu vermeiden. Durch die unterschiedliche Ausgestaltung der einzelnen Lagerstellen (Kugel/Kegel, Kugel/Prisma und Kugel/Ebene) ist jedoch die Elastizität der einzelnen Lagerstellen auch unterschiedlich, was sich ungünstig auf die Genauigkeit des Schaltpunktes auswirkt.

Diese Arten der Lagerungen sind als klassische Lagerungen zu bezeichnen, die nach den "Maxwellschen Bedingungen" gestaltet sind (s. M. Pollermann, "Bauelemente der physikalischen Technik", 2. Auflage, Kapitel 4 - Führungen und Lagerungen -; Springer Verlag 1972).

Ferner sind aus der FR-A 2 321 622 Konfigurationen bekannt, die mit kreislinienförmigen Kontaktflächen zwei Körper in eine definierte gegenseitige Lage bringen.

Darüber hinaus ist es bei Mehrkoordinaten-Tastköpfen bekannt, daß sich Meßkraftunterschiede und die damit verbundenen biegungsbedingten Schaltpunktdifferenzen bei verschiedenen Antastrichtungen durch die Erhöhung der Anzahl von Lagerstellen vermindert. Bei einer Erhöhung der Anzahl von Lagerstellen erhöht sich aber der Aufwand für die Herstellung der Paßungslagerstellen erheblich, und es besteht die Gefahr, daß das System statisch überbestimmt wird. Als Beispiel für einen Tastkopf mit mehreren Lagerstellen sei die DE-OS 27 42 817 genannt.

Dort ist am Tasterhalter eine Gruppe von Kugeln konzentrisch in einer V-Nut angebracht. Im Gehäuse befindet sich ebenfalls eine konzentrische V-Nut, in der sich eine zweite Gruppe von Kugeln befindet. Die Kugelgruppen liegen sich gegenüber und jede Kugel der einen Kugelgruppe befindet sich zwischen zwei benachbarten Kugeln der anderen Kugelgruppe.

Jede Kugel hat eine Oberfläche, die sich an die beiden gewölbten Oberflächen zweier benachbarter Kugeln anlegen kann. Eine Feder drängt den Tasterhalter zum Gehäuse hin, und die Kugeln berühren sich aufgrund der von der Feder ausgeübten Vorspannkraft mit ihren Oberflächen an Punkten.

Um sicherzustellen, daß zwischen jeder Kugel der einzelnen Kugelgruppe und zwei benachbarten Kugeln der anderen Kugelgruppe die gewünschte Berührung stattfindet, läßt man die Kugeln anfänglich frei in ihren Nuten rollen, wo sie sich dann aufgrund der Federkraft und der Wölbung der Flächen in Positionen einstellen, in welchen alle Kugeln der einen Kugel gruppe alle Kugeln der anderen Kugelgruppe berühren. Die von zwei benachbarten Kugeln der einen Kugelgruppe gebildeten Flächen sind natürlich in der gleichen Weise zueinander gewölbt wie die Flächen zweier benachbarter Kugeln der anderen Kugelgruppe und beide Kugelgruppen verhalten sich, was die Einnahme der gegenseitigen Positionen in den Nuten betrifft, in der gleichen Weise. Um ein vollständiges und schnelles Ausrichten der Kugeln zu erzielen, kann eine verhältnismäßig starke Feder verwendet und der Tastkopf vibriert werden, wobei der Taster mittels einer Vorrichtung axial gehalten wird.

Die Kugeln werden in der beschriebenen Weise eingestellt und ausgerichtet, während vorher in die Nuten eingebrachtes Epoxyharz noch weich ist. Das als Klebstoff dienende Harz härtet aus, während die relative Lage des Gehäuses und des Tasters unverändert beibehalten wird.

Bei dieser Lagerung des Taststiftes haben alle Auflagepunkte gleiche Elastizitätseigenschaften.

Für eine hohe Genauigkeit des Schaltpunktes sind jedoch nicht nur gleiche Elastizitätseigenschaften wichtig, sondern die absolute Steifigkeit der Auflagestellen sollte auch möglichst hoch sein. Da sich bei der vorbeschriebenen Tasterlagerung aber jeweils nur Punkte berühren, ist die absolute Steifigkeit der einzelnen Auflagestellen nicht sehr hoch.

Der vorliegenden Erfindung liegt die Aufgabe zugrunde, eine Lagerung für einen Mehrkoordinaten-Tastkopf zu schaffen, die eine höhere Schaltgenauigkeit ermöglicht, als dies beim Stand der Technik mit vertretbaren Mitteln gegeben ist, wobei der Patentanspruch 1 gegen die EP-A 0 088 596 als nächstliegender Stand der Technik abgegrenzt ist.

Diese Aufgabe wird von einem Mehrkoordinaten-Tastkopf mit den Merkmalen des Anspruches 1 gelöst. Die abhängigen Ansprüche geben vorteilhafte Ausgestaltungen der Erfindung an.

Die besonderen Vorteile der Erfindung liegen darin, daß an jeder einzelnen Lagerstelle die Oberflächenbereiche eine an sich bekannt Kreislinie als Berührungszone aufweisen, was zu höherer Steifigkeit führt, als Punktberührung. Um Überbestimmung zu verhindern, weisen sowohl die Lagerkörper als auch die ihnen zugeordneten Gegenkörper hinreichend viele Freiheitsgrade zur gegenseitigen Anpassung und Einjustierung bei der Montage auf.

Die Erfindung wird anhand eines Ausführungsbeispiels mit Hilfe der Zeichnungen erläutert, wobei Konstruktions-Varianten aufgezeigt sind.

Es zeigt

Figur 1 einen Axialschnitt durch einen Tastkopf,
Figur 2 einen Schnitt entlang der Linie II-II des Tastkopfes aus Figur 1 mit abgenommenem Tasterhalter,
Figur 3a eine Kugel mit Gegenkörper,
Figur 3b eine Kugel mit Halterung und Gegenkörperoberteil,
Figur 4 eine Kinematik-Skizze,
Figur 5 einen schematisierten Teilausschnitt einer Tastkopflagerung
Figur 6a bis 6e konstruktive Varianten einer Lagerstelle und
Figur 7 einen Doppelexzenter

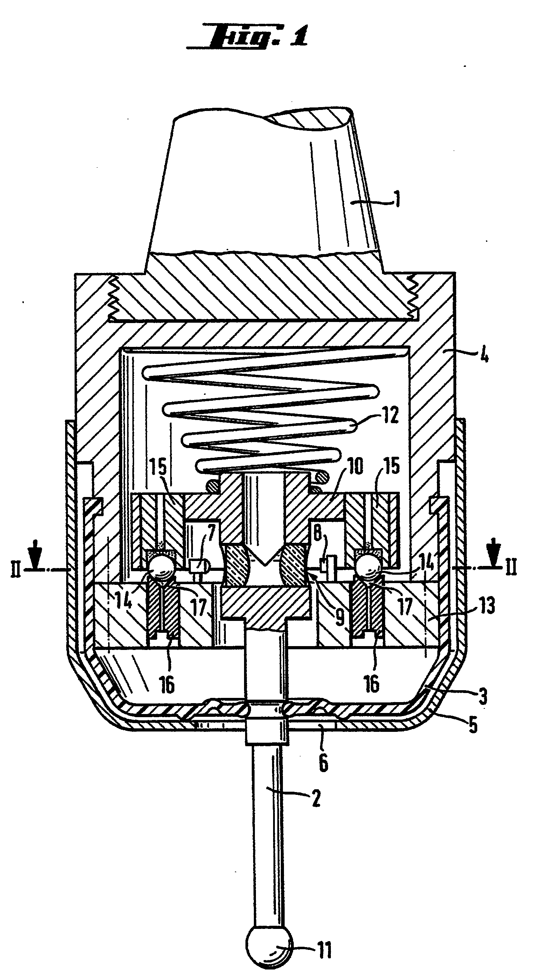

In Figur 1 ist der gesamte Aufbau eines Mehrkoordinaten-Tastkopfes ersichtlich. Dieser gezeigte Taster ist als schaltender Taster ausgeführt. Durch einen Konus 1 kann der Taster in eine Spindel einer nicht dargestellten Meß- oder Bearbeitungsmaschine eingesetzt werden. Die Auslenkung eines Taststiftes 2 ist in nahezu alle Richtungen möglich. Eine Dichtung 3 schließt den Zwischenraum zwischen einem Tastkopfgehäuse 4 und dem Taststift 2. Ein Blechschutz 5 verhindert die Beschädigung der Dichtung 3 durch heiße Späne, läßt aber einen freien Raum 6, der dem Taststift 2 eine begrenzte Auslenkung aus seiner Nullage gestattet.

Eine Detektoranordnung 7, 8, 9 zur Erfassung der Auslenkung des Taststiftes 2 gibt bei einem bestimmten Auslenkungsbetrag einen Antastimpuls ab, welcher zur Steuerung einer Werkzeugmaschine oder zur Bestimmung des Zeitpunktes der Meßwertübernahme einer Koordinaten-Meßmaschine herangezogen wird. Die Detektoranordnung 7, 8, 9 besteht aus einem im Tastkopfgehäuse 4 feststehenden optischen Sender 7 und einem dazu ausgerichteten ebenfalls feststehenden Differentialphotoelement 8. In der optischen Achse der beiden Elemente 7, 8 ist ein Linsensystem 9 fest am beweglichen Taststift 2 angebracht.

Ein Tasterhalter 10 ist mit dem Taststift 2 fest verbunden, welcher am freien Ende eine Antastkugel 11 besitzt. Eine Fläche des Tasterhalters 10 steht mit dem Tastkopfgehäuse 4 mittels einer Feder 12 in Verbindung. Die Gegenfläche ist ein Teil der Lagerung zwischen dem Tasterhalter 10 und dem Tastkopfgehäuse boden 13. Diese Lagerung muß exakt ausgeführt sein, da eine statische Unter- bzw. Überbestimmung Meßfehler verursacht, wenn eine hinreichende Reproduzierbarkeit nicht gewährleistet ist.

Während eines Antastvorganges an ein Werkstück wird der Tasterhalter 10 durch die Feder 12 solange in seiner Nullage gehalten, wie deren Kraft der Wirkung des Kontaktdrucks der Antastkugel 11 auf das Werkstück entgegenwirkt. Die Feder 12 verhindert, daß der Tasterhalter 10 in der Lagerung verschwenkt bzw. abgehoben wird, wenn die Antast-Kraft unter einem bestimmten Wert liegt. Solange der Tasterhalter 10 durch die Feder 12 gegen den Tastkopfgehäuseboden 13 gedrückt wird, bilden Tasterhalter 10 und Tastkopfgehäuse 4 eine Einheit mit dem Freiheitsgrad Null. Bei einer Auslenkung wird die Feder 12 so belastet, daß sie den Tasterhalter 10 gegen den Tastkopfgehäuseboden 13 zurückführt, wenn die Antast-Kraft nachläßt.

Die Lagerung, ausgeführt als Vielpunktlager, besteht erfindungsgemäß aus gleichmäßig über den Umfang des Tasterhalters 10 verteilten und in einer Ebene angeordneten Kugeln 14, welche im Tasterhalter 10 verankert sind.

Die Kugeln 14 befinden sich in zylindrischen Halterungen 15. Die Mittelpunkte der Kugeln 14 liegen außerhalb der Längsachsen der zylindrischen Halterungen 15. Die Kugeln 14 können also bei Drehung der zylindrischen Halterungen 15 auf einer Kreisbahn um die Achsen der Halterungen 15 bewegt werden.

Im Tastkopfgehäuseboden 13 sind zylindrische Gegenkörper 16 drehbar angeordnet. Die Gegenkörper 16 weisen in ihren den Kugeln 14 zugewandten Stirnflächen kegelige Bohrungen 17 auf, die exzentrisch zur Längsachse der Gegenkörper 16 liegen. Bei Drehung der Gegenkörper 16 um ihre Längsachsen beschreiben die Achsen der Kegel-Bohrungen 17 eine Kreisbahn um die Achsen der Gegenkörper 16.

Die Kugeln 14 und die Kegel-Bohrungen 17 bilden jeweils eine Lagerstelle, indem die Oberfläche jeder Kugel 14 mit dem Kegelmantel der Kegel-Bohrung 17 so zusammenwirkt, daß die Berührungszone eine Kreislinie ist. Bei der Vielzahl der Lagerstellen ergäbe sich eine Überbestimmung der Lagerung, die jedoch durch die Exzentrizität der Lagerelemente verhindert wird.

In dem Schnitt aus Figur 2 ist gezeigt, daß alle Gegenkörper 16 konzentrisch zur nicht bezeichneten Taststiftachse liegen. In den Stirnflächen der Gegenkörper 16 sind die Kegel-Bohrungen 17 zu erkennen, die jeweils exzentrisch zur Längsachse der Gegenkörper 16 eingebracht sind. Da die Gegenkörper 16 in dem Taststiftgehäuseboden 13 um ihre Längsachsen drehbar befestigt sind, ist die Lage der Kegelbohrungen 17 von der Stellung der Gegenkörper 16 abhängig.

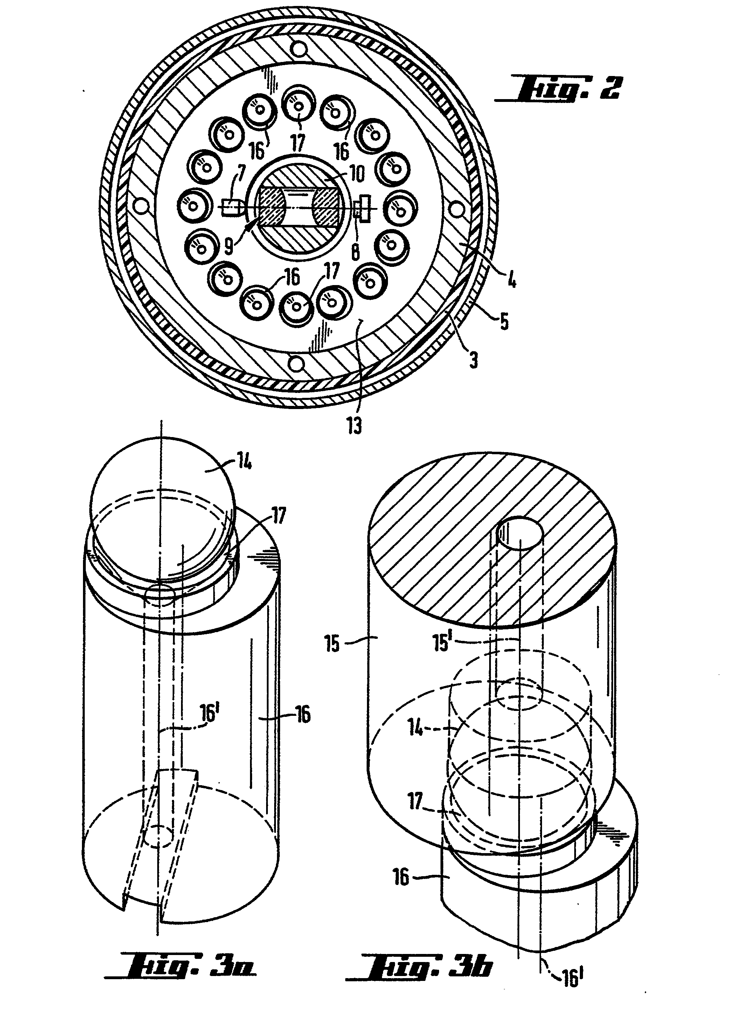

Figur 3a zeigt stark vergrößert einen der Gegenkörper 16. Die exzentrisch in der Stirnseite eingebrachte Kegel-Bohrung trägt das Bezugszeichen 17. Mit Hilfe einer ebenfalls stark vergrößerten Kugel 14 wird angedeutet, wie die Kugel 14 in der Kegel-Bohrung 17 plaziert sein soll.

In Figur 3b ist eine stark vergrößerte Halterung 15 dargestellt, die eine der Kugeln 14 aufgenommen hat.

Auch hier ist erkennbar, daß der Mittelpunkt der Kugel 14 nicht auf der Längsachse der Halterung 15 liegt. Die Kugel 14 ist mit Hilfe von Kitt in der Halterung 15 fest verankert. Ähnlich, wie es in Figur 3a dargestellt ist, befindet sich die Halterung 15 mit der Kugel 14 kurz vor der endgültigen Montage, bei der sowohl die Halterung 15 mit der Kugel 14 als auch der zugehörige Gegenkörper 16 soweit zueinander verdreht und verschoben werden, bis die Kugel 14 vollständig in der Kegel-Bohrung 17 anliegt. Kugel 14 und Kegel 17 bilden dann in der gemeinsamen Berührungszone eine Kreislinie.

Die endgültige Montageposition wird erzielt, indem sich alle Lagerungen mit ihren exzentrisch gelagerten Kugeln 14 bzw. Kegeln 17 unter Vorspannung durch eine externe, hier nicht gezeigte Feder so zueinander verschieben und verdrehen, bis jede der Kugeln 14 in ihrem zugehörigen Kegel 17 vollständig eingepaßt ist und sich als Berührungszone jeweils eine Kreislinie einstellt. Durch die Höhenverstellbarkeit der Halterungen 15 und/oder der Gegenkörper 16 ist dafür Sorge getragen, daß alle Kreislinien der einzelnen Berührungszonen in einer Ebene senkrecht zur Taststiftachse liegen. Während des beschriebenen Montagevorganges sind sowohl die Halterungen 15 als auch die Gegenkörper 16 in Bohrungen des Tasterhalters 10 bzw. des Tastkopfgehäusebodens 13 eingekittet. Der Kitt härtet nach der Justierung aus, so daß nach Beendigung des Montagevorganges die Positionen der Kugeln 14 relativ zu ihren Kegeln 17 erhalten bleiben.

Aus der Kinematik-Skizze der Figur 4 ist ersichtlich, weshalb die exzentrisch angeordneten Kugeln 14 und Kegel 17 zu einer gemeinsamen Position P finden können. Die Position 15' symbolisiert die Längsachse der Halterung 15, um die sich die exzentrisch in der Halterung 15 gelagerte Kugel 14 auf einer Kreisbahn drehen kann. Der Gegenkörper 16 dreht sich um seine symbolisch dargestellte Längsachse 16', so daß sich die exzentrisch in einer der Stirnflächen des Gegenkörpers 16 eingebrachte Kegel-Bohrung 17 auch auf einer Kreisbahn bewegen kann. Die beiden Kreisbahnen haben in dem hier relevanten Bereich einen gemeinsamen Schnittpunkt P. Dieser Punkt P ist bei der praktisch durchgeführten Montage der Punkt, an dem die jeweilige Kugel 14 satt in ihrem zugeordneten Kegel 17 sitzt.

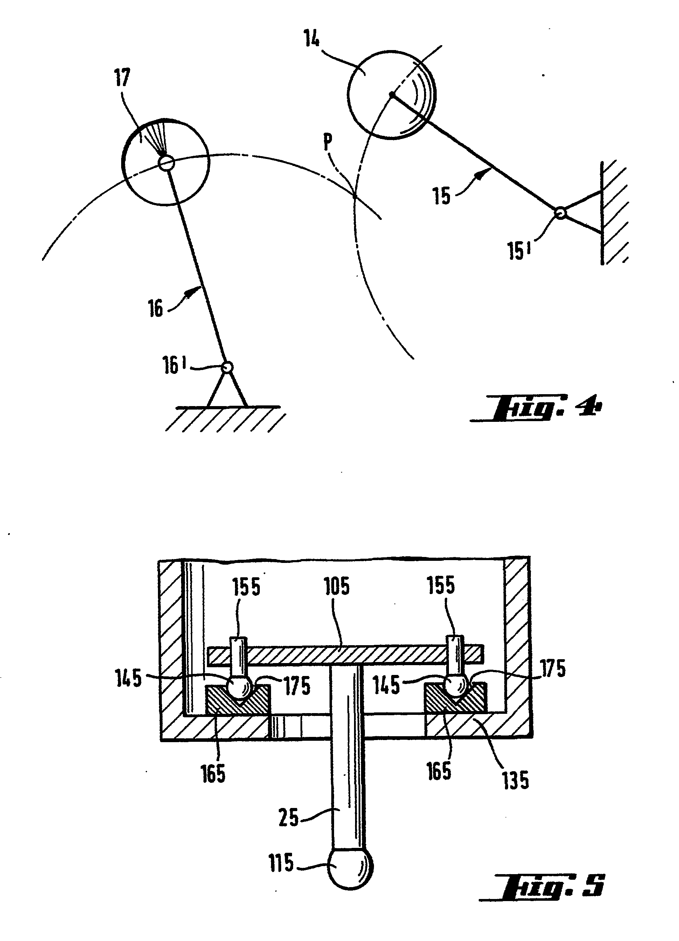

Wie Figur 5 zeigt, kann die Lagerung des Tasterhalters auch anders ausgestaltet sein, ohne den Bereich der Erfindung zu verlassen. Hier sind nur die notwendigsten Elemente gezeigt. Auf einem Tastkopfgehäuseboden 135 sind Gegenkörper 165 angeordnet, die an ihren Stirnseiten Kegel-Bohrungen 175 aufweisen. Die Gegenkörper 165 sind in einer Ebene auf dem Tastkopfgehäuseboden 135 frei verschiebbar und um sich selbst drehbar. Die Gegenkörper 165 dienen zur Aufnahme von Kugeln 145 die mittels Halterungen 155 an einem Tasterhalter 105 angeordnet sind. Der Tasterhalter 105 trägt in bekannter Weise einen Taststift 25 mit einer Antastkugel 115. Die Halterungen 155 mit den Kugeln 145 sind drehbar und längsverschieblich im Tasterhalter 105 gelagert.

Zur Montage und Justierung ist zwischen dem Tastkopfgehäuseboden 135 und den Gegenkörpern 165 sowie zwischen dem Tasterhalter 105 und den Halterungen 155 ein Kittfilm vorgesehen, der die vorbeschriebene Beweglichkeit zuläßt. Mittels einer nicht dargestellten Montagevorrichtung wird nun der Tasterhalter 105 zum Tastkopfgehäuseboden 135 justiert. Dabei richten sich die am Tastkopfgehäuseboden 135 frei verschiebbaren Gegenkörper 165 mit ihren Kegel-Bohrungen 175 genau zu den Kugeln 145 aus, die mit ihren Halterungen 155 axial im Tasterhalter 105 beweglich und drehbar sind. Auf diese Weise wird für den Taststift 25 eine Nullage erzeugt, in der die Berührungszonen zwischen den Kugeln 145 und den zugeordneten Kegel-Bohrungen 175 Kreislinien bilden, die in einer Ebene senkrecht zur Taststiftachse liegen. Somit sind die gleichen vorteilhaften Lagerbedingungen geschaffen, wie bei dem Tastkopf gemäß dem Ausführungsbeispiel nach den Figuren 1 bis 3.

Für den Fachmann ist erkennbar, daß die Ausführungsbeispiele gemäß Figur 6a bis 6e vorteilhafte Konstruktions-Varianten sind, die der Fachmann den Anforderungen entsprechend auswählt. So zeigt Figur 6a einen auf einem Tastkopfgehäuseboden 136 frei verschiebbaren Kegel 166 dessen Oberfläche mit einer zylindrischen Buchse 156 zusammenwirkt, die im Tasterhalter 106 angeordnet ist. Die Berührungszone zwischen Kegel 166 und Buchse 156 ist eine Kreislinie.

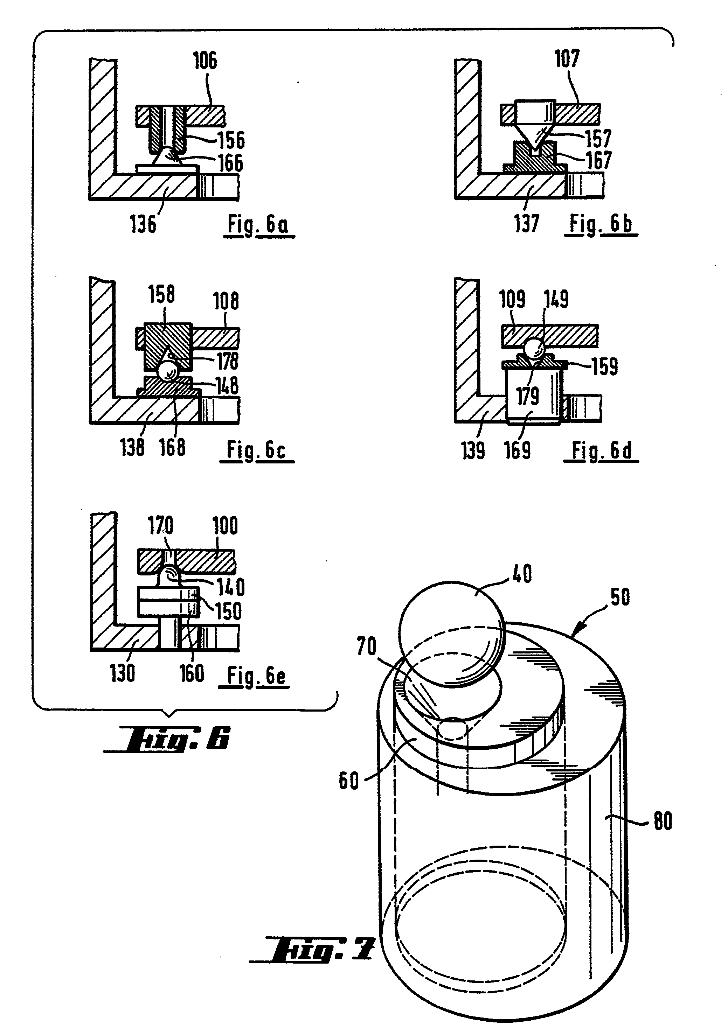

Bei der Variante gemäß Figur 6b sind die Elemente vertauscht: Eine auf einem Tastkopfgehäuseboden 137 frei verschiebbare Buchse 167 wirkt in der beschriebenen Weise mit einem in einem Tasterhalter 107 angeordneten Kegel 157 zusammen.

Bei der Variante gemäß Figur 6c befindet sich eine Kugel 148 in einer Halterung 168 und ist zusammen mit dieser auf einem Tastkopfgehäuseboden 138 frei verschiebbar. In einem Tasterhalter 108 ist ein Körper 158 axial verschiebbar und drehbar angeordnet, der an seiner der Kugel 148 zugewandten Stirnseite eine Kegel-Bohrung 178 aufweist.

Figur 6d zeigt eine weitere konstruktive Abwandlung. In einem Tastkopfgehäuseboden 139 ist drehbar und axial verschiebbar ein zylindrischer Körper 169 gelagert. Auf dessen zum Tastkopfgehäuseboden 139 paralleler Oberfläche bindet sich ein verschiebbarer Gegenkörper 159, dessen Kegel-Bohrung 179 mit einer Kugel 149 zusammenwirkt, die fest in einem Tasterhalter 109 angebracht ist.

Eine weitere Möglichkeit zur erfindungsgemäßen Taststiftlagerung zeigt Figur 6e: In einem Tasterhalter 100 ist eine Bohrung 170 eingebracht. In einem Tastkopfgehäuseboden 130 befindet sich ein axial verschiebbarer Stempel 160, auf dessen zum Tastkopfgehäuseboden 130 paralleler Oberfläche ein drehbarer und verschiebbarer Gegenkörper 150 angeordnet ist, dessen sphärischer Kopfbereich 140 mit der Bohrung 170 im Tasterhalter 100 zusammenwirkt.

Besonders vorteilhaft läßt sich die erfindungsgemäße Lagerung ausführen, wenn als Lagerkörper Kugeln 40 verwendet werden, die in beliebiger Weise im Tasterhalter befestigt sind, wie es in Figur 6d mit den Kugeln 149 am Tasterhalter 109 gezeigt ist.

Die erforderliche Justierbarkeit wird mit einem Doppelexzenter 50 erreicht, der außerdem eine axiale Verstellung einer Kegel-Bohrung 70 ermöglicht. Der doppelexzenter 50 wird realisiert, indem eine Kegel-Bohrung 70 in einer der Stirnseiten eines Gegenkörpers 60 so eingebracht ist, daß die Achse der Kegel-Bohrung 70 parallel zur Längsachse des Gegenkörpers 60 verläuft. Die Kegel-Bohrung 70 kann bei Drehung des Gegenkörpers 60 um seine Längsachse somit auf einer Kreisbahn verschwenkt werden. Der Gegenkörper 60 ist nun so in einem Aufnahmezylinder 80 gelagert, daß auch die Längsachse des Aufnahmezylinders 80 und die Längsachse des Gegenkörpers 60 parallel zueinander verlaufen. Auf diese Weise wird ein zweiter Exzenter gebildet. Der Aufnahmezylinder 80 ist in seiner Aufnahme - beispielsweise dem hier nicht dargestellten Tastkopfgehäuseboden - um seine Längsachse drehbar, so daß der Gegenkörper 60 auf einer Kreisbahn um die Achse des Aufnahmezylinders verschwenkt werden kann. Der Gegenkörper 60 ist darüber hinaus noch um seine eigene Achse drehbar, so daß sich die Kegel-Bohrung 70 auf einer anderen Kreisbahn bewegen läßt. Die axiale Verstellung kann durch den Gegenkörper 60 und/oder den Aufnahmezylinder 80 erfolgen.

Ein nicht unerheblicher Vorteil liegt bei der vorbeschriebenen Lösung darin, daß der vollständige Tasterhalter eine verhältnismäßig geringe Masse haben kann, weil alle Einstellelemente im Tastkopfgehäuseboden angeordnet sind.

Es soll noch erwähnt werden, daß sich natürlich auch hier Variationen, ähnlich wie in Figur 6 aufgezeigt, realisieren lassen.

Allen Ausführungsbeispielen ist gemeinsam, daß die Berührungszonen der Oberflächen der einander zugeordneten Lager- bzw. Gegenkörper jeweils eine Kreislinie bilden, und daß die Kreislinien in einer gemeinsamen Ebene senkrecht zur Taststiftachse liegen.

Aus Gründen der Übersichtlichkeit wurden nur die Bezugszeichen des Haupt-Ausführungsbeispiels im unabhängigen Anspruch aufgeführt.

Unter dem Begriff "definierte Nullage" wird die Ruhestellung des Taststiftes im nicht ausgelenkten Zustand verstanden. In diese Ruhestellung - also die definierte Nullage - muß der Taststift nach beendeter Auslenkung immer wieder genau zurückkehren, sie muß also genau reproduzierbar sein.

**Patentansprüche**

1. Mehrkoordinaten-Tastkopf mit wenigstens einem, in mehrere Koordinatenrichtungen auslenkbaren Taststift (2), der durch eine Rückstellkraft in eine seine Nullage bestimmende Lagerung gedrängt wird, welche durch das Zusammenwirken von Oberflächenbereichen mehrerer Lagerkörper (14) mit Oberflächenbereichen einer entsprechenden Anzahl von einstellbaren Gegenkörpern (16) gebildet wird, wobei die mit dem Taststift (2) verbundenen Lagerkörper (14) und die diesen zugeordneten Gegenkörper (16) konzentrisch um die Tastkopfachse angeordnet sind, dadurch gekennzeichnet, dass die Lagerkörper (14) und/oder die Gegenkörper (16) radial und/oder axial derart einstellbar sind, dass in der Nullage des Taststiftes (2) die Berührungszonen des jeweiligen Oberflächenbereiche der Lagerkörper (14) und der Oberflächenbereiche (17) der zugeordneten Gegenkörper (16) jeweils eine Kreislinie bilden, und dass vorzugsweise die Gesamtheit der so gebildeten Kreislinien in einer Ebene senkrecht zur Tastkopfachse liegt.

2. Mehrkoordinaten-Tastkopf nach Anspruch 1, dadurch gekennzeichnet, dass die Lagerkörper als verstellbare Kugeln (14, 145, 149) ausgestaltet sind, die mit Kegel-Bohrungen (17, 175, 179) zusammenwirken, die in verstellbaren Gegenkörpern (16, 165, 159) angeordnet sind.

3. Mehrkoordinaten-Tastkopf nach Anspruch 2, dadurch gekennzeichnet, dass die Lagerkörper als axial verstellbare Kugeln (14, 145) ausgebildet sind, die mit Kegel-Bohrungen (17, 174) zusammenwirken, die in radial verstellbaren Gegenkörpern (16, 165) angeordnet sind.

4. Mehrkoordinaten-Tastkopf nach Anspruch 2, dadurch gekennzeichnet, dass die Lagerkörper als radial verstellbare Kugeln (14) ausgebildet sind, die mit Kegel-Bohrungen (17) zusammenwirken, die in axial verstellbaren Gegenkörpern (16) angeordnet sind.

5. Mehrkoordinaten-Tastkopf nach einem der Ansprüche 1 bis 4, dadurch gekennzeichnet, dass die Lagerkörper als Kugeln (14) ausgebildet sind, die exzentrisch in jeweils einer axial verschiebbaren und drehbaren Halterung (15) angeordnet sind, und dass die Gegenkörper (16) drehbar und axial verschiebbar sind und an ihren den Kugeln (14) zugewandten Stirnseiten jeweils eine exzentrische Kegel-Bohrung (17) aufweisen, deren Achse jeweils parallel zu den Längsachsen der Gegenkörper (16) verläuft.

6. Mehrkoordinaten-Tastkopf nach Anspruch 1, dadurch gekennzeichnet, dass die Lagerkörper als verstellbare Kegel (157) ausgebildet sind, die mit verstellbaren Buchsen (167) als Gegenkörper zusammenwirken.

7. Mehrkoordinaten-Tastkopf nach Anspruch 1, dadurch gekennzeichnet, dass die Gegenkörper (150) einen sphärischen Kopfbereich (140) aufweisen, auf einem axial verschiebbaren Stempel (160) radial verstellbar sind und mit Bohrungen (170) im Tasterhalter (100) zusammenwirken.

8. Mehrkoordinaten-Tastkopf nach Anspruch 1, dadurch gekennzeichnet, dass die Gegenkörper (60) an ihren den Lagerkörpern (40) zugewandten Stirnseiten jeweils eine Kegel-Bohrung (70) aufweisen, deren Achse jeweils parallel zu den Längsachsen der Gegenkörper (60) verläuft, und dass die Gegenkörper (60) ihrerseits exzentrisch in drehbaren Aufnahmezylindern (80) gelagert sind.

9. Mehrkoordinaten-Tastkopf nach Anspruch 1, dadurch gekennzeichnet, dass die Lagerkörper (14, ..., 149) und die Gegenkörper (16, ..., 168) gleichmässig konzentrisch um die Tastkopfachse verteilt sind.

**Claims**

1. Multi-coordinate feeler head with at least one feeler rod (2) deflectable in a plurality of coordinate directions, which is biased into a seating determining its zero position by a restoring force, which seating is formed by the cooperation of surface regions of a plurality of bearing bodies (14) with surface regions of a corresponding number of adjustable counter-bodies (16), wherein the bearing bodies (14) connected to the feeler rod (2) and the counter-bodies (16) associated therewith are arranged concentrically around the feeler head axis, characterized in that the bearing bodies (14) and/or the counter-bodies (16) are so adjustable radially and/or axially that, in the zero position of the feeler rod (2), the contact zones of the respective surface regions of the bearing bodies (14) and the surface regions (17) of the associated counter-bodies (16) each form a circular line, and in that preferably the totality of the circular lines thus formed lie in a plane perpendicular to the feeler rod axis.

2. Multi-coordinate feeler head according to claim 1, characterized in that the bearing bodies are formed as adjustable balls (14, 145, 149), which cooperate with conical bores (17, 175, 179), which are arranged in adjustable counter-bodies (16, 165, 159).

3. Multi-coordinate feeler head according to claim 2, characterized in that the bearing bodies are formed as axially adjustable balls (14, 145), which cooperate with conical bores (17, 174) which are arranged in radially adjustable counter-bodies (16, 165).

4. Multi-coordinate feeler head according to claim 2, characterized in that the bearing bodies are formed as radially adjustable balls (14), which cooperate with conical bores (17) which are arranged in axially adjustable counter-bodies (16)

5. Multi-coordinate feeler head according to one of the claims 1 to 4, characterized in that the bearing bodies are formed as balls (14) which are each arranged eccentrically in an axially displaceable and rotatable holder (15), and in that the counter-bodies (16) are rotatable and axially displaceable and each have in their end faces facing the balls (14) an eccentric conical bore (17), whose axis runs in each case parallel to the longitudinal axis of the counter-body (16).

6. Multi-coordinate feeler head according to claim 1, characterized in that the bearing bodies are formed as adjustable cones (157), which cooperate with adjustable bushes (167) as counter-bodies.

7. Multi-coordinate feeler head according to claim 1, characterized in that the counter-bodies (150) have a spherical head region (140), are radially adjustable on an axially displaceable plunger (160) and cooperate with bores (170) in the feeler holder (100).

8. Multi-coordinate feeler head according to claim 1, characterized in that the counter-bodies (60) each a conical bore (70) in their end faces facing the bearing bodies (40), the axis of which bore runs in each case parallel to the longitudinal axis of the counter-body (60), and in that the counter-bodies (60) are in turn mounted eccentrically in rotatable receiving cylinders (80).

9. Multi-coordinate feeler head according to claim 1, characterized in that the bearing bodies (14, ..., 149) and the counter-bodies (16, ..., 168) are uniformly distributed concentrically around the feeler head axis.

## Revendications

1. Palpeur multi-axes comprenant au moins une touche (2) susceptible d'être déviée suivant plusieurs axes de coordonnées et aménée par une force de rappel à une position d'appui qui détermine sa position zéro et qui est définie par la coopération de parties de surface de plusieurs corps d'appui (14) avec des parties de surface d'un nombre correspondant de corps antagonistes (16) réglables, les corps d'appui (14) reliés à la touche (2) et les corps antagonistes (16) associés aux corps d'appui étant disposés concentriquement autour de l'axe du palpeur, caractérisé par le fait que les corps d'appui (14) et/ou les corps antagonistes (16) sont réglables radialement et/ou axialement de telle manière que dans la position zéro de la touche (2), les zones de contact des parties de surface des corps d'appui (14) et des parties de surface (17) des corps antagonistes (16) associées forment chaque fois une ligne circulaire, et que de préférence la totalité des lignes circulaires ainsi formées est située dans un plan perpendiculaire à l'axe du palpeur.

3. Palpeur suivant la revendication 1, caractérisé par le fait que les corps d'appui sont réalisés sous la forme de billes (14, 145, 149) réglables coopérant avec des trous coniques (17, 175, 179) disposés dans des corps antagonistes (16, 165, 159) réglables.

3. Palpeur suivant la revendication 2, caractérisé par le fait que les corps d'appui sont réalisés sous la forme de billes (14, 145) réglables axialement et coopérant avec des trous coniques (17, 174) disposés dans des corps antagonistes (16, 165) réglables radialement.

4. Palpeur suivant la revendication 2; caractérisé par le fait que les corps d'appui sont réalisés sous la forme de billes (14) réglables radialement et coopérant avec des trous coniques (17) disposés dans des corps antagonistes (16) réglables axialement.

5. Palpeur suivant l'une des revendications 1 à 4, caractérisé par le fait que les corps d'appui sont réalisés sous la forme de billes (14) disposées de façon excentrée chacune dans un support (15) rotatif et déplaçable axialement, et que les corps antagonistes (16) sont rotatifs et déplaçables axialement et présentent sur leurs côtés frontaux tournés vers les billes (14) chacun un trou conique (17) excentré dont l'axe est parallèle aux axes longitudinaux des corps antagonistes (16).

6. Palpeur suivant la revendication 1, caractérisé par le fait que les corps d'appui sont réalisés sous la forme de cônes (157) réglables coopérant avec des douilles (167) réglables en tant que corps antagonistes.

7. Palpeur suivant la revendication 1, caractérisé par le fait que les corps antagonistes (150) présentent une partie de tête (140) sphérique, sont réglables radialement sur un piston (160) déplaçable axialement et coopérent avec des trous (170) dans le porte-touche (100).

8. Palpeur suivant la revendication 1, caractérisé par le fait que les corps antagonistes (60) présentent, sur leurs côtés frontaux tournés vers les corps d'appui (40), chacun un trou conique (70) dont l'axe est parallèle aux axes longitudinaux des corps antagonistes (60), et que les corps antagonistes (60) de leur côté sont montés excentrés dans des cylindres de réception (80) rotatifs.

9. Palpeur suivant la revendication 1, caractérisé par le fait que les corps d'appui (14...149) et les corps antagonistes (16...168) sont répartis régulièrement de façon concentrique autour de l'axe du palpeur,

# Fig. 1

**Fig. 2**

**Fig. 3a**

**Fig. 3b**

**Fig. 4**

**Fig. 5**

106

156
166

136        Fig. 6a

107

157
167

137        Fig. 6b

158   108

178
148

138  168        Fig. 6c

109  149

159

179

139  169        Fig. 6d

170  100

140
150

130  160    Fig. 6e

Fig. 6

40        50

70

60

80

Fig. 7